# EUROPÄISCHE PATENTSCHRIFT

(11) **EP 2 315 327 B1**
(45) Veröffentlichungstag und Bekanntmachung des Hinweises auf die Patenterteilung: **02.01.2013**
(21) Anmeldenummer: 10186390.0
(22) Anmeldetag: 04.10.2010
(51) Int. Cl.: H02G 3/12, H02G 3/18

(54) **Unterputz-Elektro-Installationsgerät mit Spreizen**
Built-in electrical installation device with spreaders
Appareil d'installation électrique encastrée doté d'écarteurs

(30) Priorität: 23.10.2009 DE 102009050526
(43) Veröffentlichungstag der Anmeldung: 27.04.2011
(73) Patentinhaber: ABB AG, 68309 Mannheim (DE)
(72) Erfinder: Schulte-Lippern, Günter, 58513, Lüdenscheid (DE); Ewers, Manfred, 58239, Schwerte (DE)

(56) Entgegenhaltungen:
- EP-A1- 0 349 937
- EP-A1- 0 809 339
- DE-A1- 4 033 914
- FR-A2- 2 580 345

## Beschreibung

Die Erfindung betrifft ein Unterputz-Elektro-Installationsgerät mit einer Trägerplatte für die Aufnahme eines Einsatzes, wobei die Trägerplatte Spreizenhalterungen zum Halten / Lagern von zwei sich gegenüberliegenden Spreizen aufweist und kann z. B. bei Unterputz-Steckdosen, Unterputz-Schaltern, Unterputz-Tastern, Unterputz-Dimmern usw. Anwendung finden.

Aus der EP 0 349 937 B1 ist ein elektrisches Installationsgerät bekannt, welches mit Hilfe einer Spreizkrallenbefestigung in einer Unterputz-Wandeinbaudose montierbar ist, mit einem Tragring sowie zwei an diesem paarig gegenüberliegend angeordneten, jeweils von einer Blattfeder beaufschlagten Spreizkrallen, deren erster Spreizkrallenschenkel mittels einer Stellschraube an Teilen des Tragrings befestigt ist und deren zweiter Spreizkrallenschenkel unter einem Spreizkrallenknickwinkel gegenüber dem ersten Spreizkrallenschenkel abgewinkelt ist, wobei der zweite Spreizkrallenschenkel und ein zweiter Blattfederschenkel parallel ausgerichtet sind. Auf dem zweiten Spreizkrallenschenkel ist das freie Ende des zweiten Blattfederschenkels der federeleastischen Blattfeder befestigt, wobei der zweite Blattfederschenkel gegenüber einem ersten Blattfederschenkel der Blattfeder unter einem Blattfederknickwinkel abgewinkelt ist. Am freien Ende des ersten Blattfederschenkels ist ein auf Teilen des Tragrings aufliegendes und sich dort unter Vorspannung abstützendes Gleitbogenstück ausgebildet.

Aus der DE 40 33 914 A1 ist eine Steckdose für Unterputzmontage bekannt, bei welcher Dosenchassis und Spreizhaken als ein einziges Spritzteil gefertigt sind. Die Spreizhaken sind mittels Spritzhäute oder Bruchstege an dem Dosenchassis befestigt. Das Dosenchassis weist eine Bohrung / Sackbohrung auf, welche ein Gewinde aufweist oder einer gewindeformenden Schraube Platz bietet. Die Spreizhaken sind am Dosenchassis derart angeordnet, dass beim Eindrehen von Schrauben durch den Spreizhaken in die Bohrung eine Spreizwirkung erzielt wird. Im Umlenkbereich des Spreizhakens ist das Dosenchassis abgeschrägt und im Wesentlichen parallel zur Umlenkschräge des Spreizhakens gerichtet.

Aus der FR 2 580 345 A2 ist ein Unterputz-Elektro-Installationsgerät mit einer Trägerplatte und hieran befestigten Spreizenhalterungen bekannt. Die Spreize weist eine Längsbohrung zur Aufnahme einer Schraube und einen quer hierzu angeordneten keilförmigen Einschnitt auf. Beim Hereindrehen der Stellschraube in die Längsbohrung ergibt sich automatisch eine dem keilförmigen Einschnitt entsprechende Abwinkelung des Spreizen-Endes, wodurch am Spreizen-Ende angeordnete Auszackungen in die Wandung einer Unterputz-Gerätedose eindringen. Durch die Federkraft des Einschnitts ergibt sich eine Rückstellung der Spreize beim Herausdrehen der Schraube.

Aus der EP 0 809 339 A1 ist ein elektrisches Installationsgerät mit einem Sockelkörper und einem an diesem beweglich angeordneten Fixierkörper bekannt. Der Fixierkörper ist zum Festhalten des Installationsgerätes in einer Installationsdose vorgesehen und mit Hilfe eines Verstellelementes aus einer inneren Ruhestellung nach außen in eine Betriebsstellung bewegbar und dabei an seiner Außenseite an die Innenfläche der Installationsdose anpreßbar. Der Fixierkörper kann aus einem elektrisch isolierenden Material bestehen und an seiner Außenseite einen oder mehrere Zacken tragen.

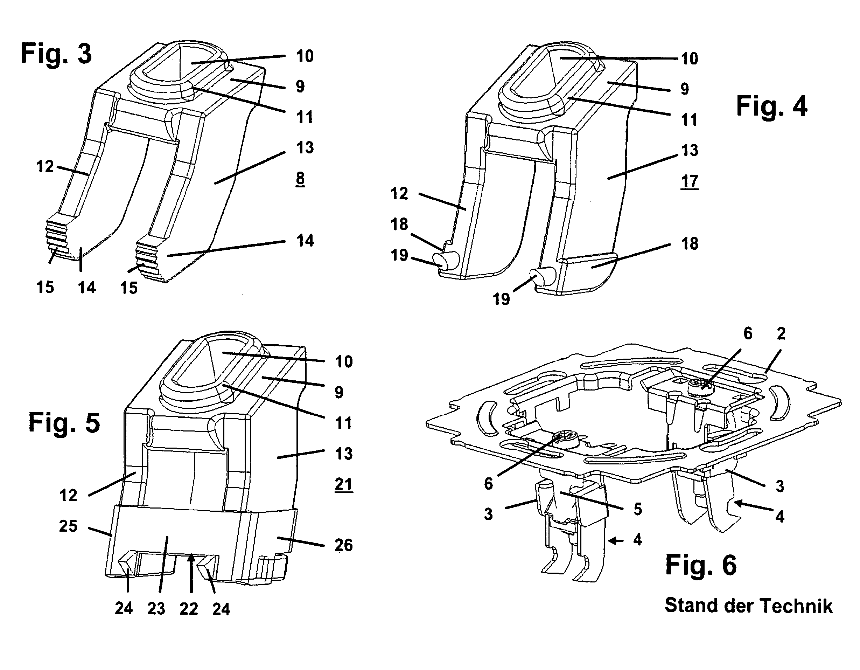

Der Einsatz eines Unterputz-Elektro-Installationsgerätes, wie z. B. der Steckdosensockel einer Steckdose, wird in der Regel von einer Trägerplatte aus Metall, z. B. einem Tragring, aufgenommen. Die Spreizkralle wird dabei üblicherweise unter Verwendung einer Spreizenhalterung an der Trägerplatte gelagert und gehalten. In Fig. 6 (Stand der Technik) ist hierzu eine perspektivische Sicht auf die Vorderseite einer Trägerplatte aus Metall (Tragring) 2 mit zwei sich gegenüberliegenden, in Spreizenhalterungen 3 gehaltenen / gelagerten herkömmlichen Spreizkrallen 4 gezeigt. Zur Betätigung der Spreizkrallen 4 dienen Stellschrauben 6. Beim Lösen dieser Stellschrauben 6 werden die Spreizkrallen 4 mit Hilfe von Blattfedern 5 in eine Ruheposition in Richtung zum Einsatz (z. B. Steckdosensockel) hin gedrückt, bei welcher eine Entnahme des Unterputz-Elektro-lnstallationsgerätes aus der UP-Gerätedose in einfacher Weise möglich ist.

Wenn bei der Montage des Unterputz-Elektro-lnstallationsgerätes in der UP-Gerätedose beim Anziehen der Stellschrauben und Anpressen der Spreizkrallen gegen die Wand der UP-Gerätedose eine Leitung mit elektrischem Potential gequetscht / beschädigt wird, besteht die Gefahr, dass das Potential über die Spreizkrallen 4 und die Spreizenhalterung 3 auf die Trägerplatte 2 übertragen wird, da Spreizkrallen 4, Spreizenhalterung 3 und Trägerplatte 2 aus einem elektrisch leitfähigem Metall bestehen.

Der Erfindung liegt die Aufgabe zugrunde, ein hinsichtlich der elektrischen Sicherheit optimiertes Unterputz-Elektro-lnstallationsgerät mit Spreizen anzugeben.

Diese Aufgabe wird in Verbindung mit den Merkmalen des Oberbegriffes des Anspruchs 1 erfindungsgemäß dadurch gelöst, dass eine Spreize aus einem elektrisch isolierenden Kunststoff gebildet ist, bestehend aus einer Basisplatte mit zwei rechtwinklig daran angeformten Spreizenschenkeln, wobei die Basisplatte eine von einem randseitigen Verstärkungswulst umschlossene Ausnehmung zur Durchführung einer Stellschraube aufweist.

Die mit der Erfindung erzielbaren Vorteile liegen insbesondere darin, dass mit geringem konstruktivem Aufwand eine Potentialfreiheit der metallenen Trägerplatte gewährleistet ist, d. h. auch im Falle einer Verletzung der elektrischen Isolation einer in der UP-Gerätedose geführten, potentialbelasteten Leitung durch eine Spreize ist gewährleistet, dass die Trägerplatte des Elektro-Installationsgerätes nicht mit einer für Personen gefährlichen Spannung beaufschlagt wird, sondern vielmehr potentialfrei bleibt.

Zweckmäßige Ausgestaltungen der Erfindung sind in den Unteransprüchen gekennzeichnet. So können die Spreizenschenkel der Spreize jeweils eine Kralle mit nach außen gerichteter Verzahnung aufweisen. Alternativ hierzu kann eine Spreize in Kunststoff-Metall-Hybridstruktur verwendet werden, bei welcher die Spreizenschenkel der Spreize jeweils eine verbreiterte Kralle mit eingelegtem oder umspritztem, nach außen gerichtetem Metallstift aufweisen.

Des Weiteren kann auch eine Spreize mit daran befestigter Metallkomponente eingesetzt werden, bestehend aus einem Metallbügel mit einem Basisschenkel und zwei rechtwinklig daran angeformten, um die Spreizenschenkel greifenden Seitenschenkeln, wobei dieser Metallbügel mindestens eine nach außen gerichtete Spitze aufweist.

Die Erfindung wird nachstehend an Hand der in der Zeichnung dargestellten Ausführungsbeispiele erläutert. Es zeigen:
- Fig. 1: eine perspektivische Sicht auf die Rückseite eines Einsatzes eines Unter- putz-Elektro-lnstallationsgerätes,
- Fig. 2: eine perspektivische Sicht auf die Vorderseite einer Trägerplatte mit Spreizen,
- Fig. 3: eine perspektivische Ansicht einer Spreize aus Kunststoff,
- Fig. 4: eine perspektivische Ansicht einer Spreize in Kunststoff-Metall- Hybridstruktur,
- Fig. 5: eine perspektivische Ansicht einer Spreize aus Kunststoff mit daran befes- tigter Metallkomponente,
- Fig. 6: eine perspektivische Sicht auf die Vorderseite einer Trägerplatte mit her- kömmlichen Spreizkrallen (Stand der Technik).

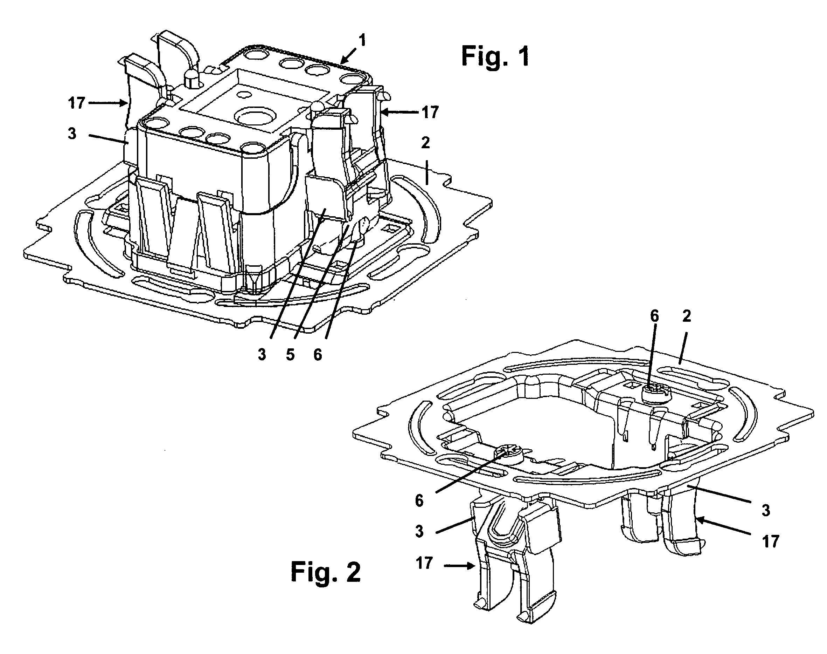

In Fig. 1 ist eine perspektivische Sicht auf die Rückseite eines Einsatzes eines Unterputz-Elektro-lnstallationsgerätes dargestellt. Es ist ein Einsatz 1, z. B. ein Schaltersockel, mit Trägerplatte 2 (Tragring) zu erkennen, welcher mit zwei Spreizenhalterungen 3 versehen ist, die zum Halten / Lagern je einer Spreize 17 dienen. Details der Spreizen 17 sind unter Fig. 4 erläutert. Die Betätigung der Spreizen 17, d. h. das Anpressen gegen die Wandung einer UP-Gerätedose, erfolgt durch entsprechendes Anziehen der Stellschrauben 6 während der Montage des Elektro-Installationsgerätes. Beim Lösen der Stellschrauben 6 werden die Spreizen 17 mittels Blattfedern 5 in Richtung zum Einsatz 1 hin gedrückt.

In Fig. 2 ist eine perspektivische Sicht auf die Vorderseite einer Trägerplatte mit Spreizen dargestellt. Es sind die beiden an der Trägerplatte 2 angeordneten, sich gegenüberliegenden Spreizenhalterungen 3 zu erkennen, welche je eine Spreize 17 halten / lagern. Des Weiteren sind die beiden Stellschrauben 6 skizziert.

In Fig. 3 ist eine perspektivische Ansicht einer Spreize aus Kunststoff dargestellt. Die Spreize 8 ist aus einem elektrisch isolierenden Kunststoff gebildet und besteht aus einer Basisplatte 9 mit zwei rechtwinklig daran angeformten Spreizenschenkeln 12, 13, wobei die Basisplatte 9 eine von einem randseitigem Verstärkungswulst 11 umschlossene Ausnehmung 10 zur Durchführung einer Stellschraube 6 aufweist. Es wird ein hochfester Kunststoff verwendet. Die Spreizenschenkel 12, 13 der Spreize 8 weisen jeweils eine Kralle 14 mit nach außen gerichteter, d. h. im Montagefall zur Wandung der UP-Gerätedose gerichteter Verzahnung 15 auf. Hierdurch wird eine hohe Reibkraft zwischen Elektro-Installationsgerät und UP-Gerätedose erreicht, welche z. B. den bei Schaltern und Dimmern gestellten Anforderungen hinsichtlich der Auszugskraft aus der UP-Gerätedose entspricht.

In Fig. 4 ist eine perspektivische Ansicht einer Spreize in Kunststoff-Metall-Hybridstruktur dargestellt. Die Ausführung mit Basisplatte 9, Ausnehmung 10, Verstärkungswulst 11 und Spreizenschenkel 12, 13 aus hochfestem Kunststoff ist wie vorstehend erläutert. Bei dieser Spreize 17 weisen die Spreizenschenkel 12, 13 jeweils endseitig eine verbreiterte Kralle 18 mit eingelegtem oder teilweise umspritztem (Inserttechnik unter Einsatz von Kunststoff-Spritzgießen), nach außen gerichtetem Metallstift 19 auf. Zweckmäßig ist zur Sicherstellung einer dauerhaften Verbindung eine Verzahnung zwischen Metall und Kunststoff vorgesehen, z. B. in Form von Rippen auf dem Metallstift 19 oder Ausnehmungen im Metallstift 19. Endseitig weist der Metallstift 19 eine Spitze auf, welche selbstverständlich frei von Kunststoffmaterial ist.

In Fig. 5 ist eine perspektivische Ansicht einer Spreize aus Kunststoff mit daran befestigter Metallkomponente dargestellt. Die Ausführung mit Basisplatte 9, Ausnehmung 10, Verstärkungswulst 11 und Spreizenschenkel 12, 13 aus hochfestem Kunststoff ist wie vorstehend erläutert. An der gezeigten Spreize 21 ist eine Metallkomponente befestigt, bestehend aus einem Metallbügel 22 mit einem Basisschenkel 23 und zwei rechtwinklig daran angeformten, um die Spreizenschenkel 12, 13 greifenden Seitenschenkeln 25, 26. Der Metallbügel 22 weist mindestens eine (im gezeigten Beispiel zwei) nach außen gerichtete Spitze 24 auf.

Die Ausführungsformen gemäß den Figuren 4 und 5 entsprechen erhöhten zu stellenden Anforderungen hinsichtlich der Auszugskraft aus der UP-Gerätedose.

In den beiden Figuren 1, 2 sind beispielhaft die Spreizen 17 gezeigt, die Ausführungen gelten in gleicher Weise selbstverständlich auch für gegebenenfalls eingesetzte Spreizen 8 oder 21.

### Bezugszeichenliste

- 1: Einsatz (z. B. Steckdosensockel) eines Unterputz-Elektro- Installationsgerätes (z. B. Steckdose, Schalter, Taster, Dimmer)
- 2: Trägerplatte (Tragring) aus Metall
- 3: Spreizenhalterung
- 4: herkömmliche Spreizkrallen
- 5: Blattfeder
- 6: Stellschraube
- 7: -
- 8: Spreize aus Kunststoff (elektrisch isolierend)
- 9: Basisplatte
- 10: Ausnehmung
- 11: Verstärkungswulst
- 12: erster Spreizenschenkel
- 13: zweiter Spreizenschenkel
- 14: Kralle
- 15: Verzahnung
- 16: -
- 17: Spreize in Kunststoff-Metall-Hybridstruktur (elektrisch isolierend)
- 18: Kralle (verbreitert)
- 19: Metallstift (eingelegt oder umspritzt) mit Spitze
- 20: -
- 21: Spreize aus Kunststoff mit daran befestigter Metallkomponente (elekt- risch isolierend)
- 22: Metallbügel (aufgesetzt / aufgesteckt)
- 23: Basisschenkel
- 24: Spitze
- 25: erster Seitenschenkel
- 26: zweiter Seitenschenkel

## Patentansprüche

1. Unterputz-Elektro-Installationsgerät mit einer Trägerplatte (2) für die Aufnahme eines Einsatzes (1), wobei die Trägerplatte (2) Spreizenhalterungen (3) zum Halten / Lagern von zwei sich gegenüberliegenden Spreizen (8, 17, 21) aufweist, **dadurch gekennzeichnet, dass** eine Spreize (8, 17, 21) aus einem elektrisch isolierenden Kunststoff gebildet ist, bestehend aus einer Basisplatte (9) mit zwei rechtwinklig daran angeformten Spreizenschenkeln (12, 13), wobei die Basisplatte (9) eine von einem randseitigem Verstärkungswulst (11) umschlossene Ausnehmung (10) zur Durchführung einer Stellschraube (6) aufweist.

2. Unterputz-Elektro-Installationsgerät nach Anspruch 1, **dadurch gekennzeichnet, dass** die Spreizenschenkel (12, 13) der Spreize (8) jeweils eine Kralle (14) mit nach außen gerichteter Verzahnung (15) aufweisen.

3. Unterputz-Elektro-Installationsgerät nach Anspruch 1, **gekennzeichnet durch** eine Spreize (17) in Kunststoff-Metall-Hybridstruktur, bei welcher die Spreizenschenkel (12, 13) der Spreize (17) jeweils eine verbreiterte Kralle (18) mit eingelegtem oder umspritztem, nach außen gerichtetem Metallstift (19) aufweisen.

4. Unterputz-Elektro-Installationsgerät nach Anspruch 1, **gekennzeichnet durch** eine Spreize (21) mit daran befestigter Metallkomponente, bestehend aus einem Metallbügel (22) mit einem Basisschenkel (23) und zwei rechtwinklig daran angeformten, um die Spreizenschenkel (12, 13) greifenden Seitenschenkeln (25, 26), wobei dieser Metallbügel (22) mindestens eine nach außen gerichtete Spitze (24) aufweist.

## Claims

1. Flush-mounted electrical installation device having a mounting plate (2) for holding an insert (1), wherein the mounting plate (2) has spreader holders (3) for holding/bearing two opposite spreaders (8, 17, 21) **characterized in that** a spreader (8, 17, 21) is formed from an electrically insulating plastic, consisting of a base plate (9) with two spreader limbs (12, 13) which are integrally formed at right angles on it, wherein the base plate (9) has a recess (10), which is surrounded by a reinforcing bead (11) at the edge, for an adjusting screw (6) to pass through.

2. Flush-mounted electrical installation device according to Claim 1, **characterized in that** the spreader limbs (12, 13) of the spreader (8) each have a claw (14) with a tooth system (15) pointing outwards.

3. Flush-mounted electrical installation device according to Claim 1, **characterized by** a spreader (17) with a plastic-metal hybrid structure, in which the spreader limbs (12, 13) of the spreader (17) each have a broadened claw (18) with an inserted or insert-moulded metal pin (19) pointing outwards.

4. Flush-mounted electrical installation device according to Claim 1, **characterized by** a spreader (21) having a metal component attached to it, consisting of a metal bracket (22) with a base limb (23) and two side limbs (25, 26) which are integrally formed at right angles on it and grip the spreader limbs (12, 13), wherein this metal bracket (22) has at least one point (24) pointing outwards.

## Revendications

1. Appareil d'installation électrique dissimulé comportant une plaque de support (2) destinée à recevoir un insert (1), dans lequel la plaque de support (2) comprend des fixations d'entretoises (3) destinées à fixer/positionner deux entretoises (8, 17, 21) opposées, **caractérisé en ce qu'**une entretoise (8, 17, 21) est formée d'une matière plastique électriquement isolante, constituée d'une plaque de base (9) comportant deux jambes d'entretoise (12, 13) formées sur celle-ci à angle droit, dans lequel la plaque de base (9) comprend un évidement (10) entouré par un bourrelet de renfort (11) périphérique destiné à l'introduction d'une vis de réglage (6).

2. Appareil d'installation électrique dissimulé selon la revendication 1, **caractérisé en ce que** les jambes d'entretoise (12, 13) de l'entretoise (8) comprennent respectivement une griffe (14) comportant une dentelure (15) orientée vers l'extérieur.

3. Appareil d'installation électrique dissimulé selon la revendication 1, **caractérisé par** une entretoise (17) et une structure hybride en matière plastique et métal, dans lequel les jambes d'entretoise (12, 13) de l'entretoise (17) comprennent respectivement une griffe élargie (18) comportant une broche métallique (19) insérée ou surmoulée dirigée vers l'extérieur.

4. Appareil d'installation électrique dissimulé selon la revendication 1, **caractérisé par** une entretoise (21) présentant des composants métalliques fixés sur celle-ci, constituée d'un support métallique (22) comportant une jambe de base (23) et deux jambes d'entretoise (25, 26) formées sur celui-ci à angle droit, se fixant autour des jambes d'entretoise (12, 13), dans lequel ce support métallique (22) comprend au moins une pointe (24) dirigée vers l'extérieur.
